# EUROPÄISCHE PATENTANMELDUNG

(11) **EP 1 208 902 A1**
(43) Veröffentlichungstag der Anmeldung: **29.05.2002**
(21) Anmeldenummer: 01125015.6
(22) Anmeldetag: 20.10.2001
(51) Int. Cl.: B01D 46/52, F02M 35/024, B01D 29/01

(54) **Flaches Filterelement mit angegossenem Rahmen**

(30) Priorität: 24.11.2000 DE 10058478
(71) Anmelder: FILTERWERK MANN & HUMMEL GMBH, 71631 Ludwigsburg (DE)
(72) Erfinder: Müller, Heinz, 71686 Remseck (DE); Schwinghammer, Alfons, 84130 Dingolfing (DE)
(74) Vertreter: Voth, Gerhard, Dipl.-Ing.

(57) **Zusammenfassung**

Es wird ein Filterelement 13 mit einem gegossenen Rahmen 15 vorgeschlagen, welches zum Einbau in ein Gehäuse 11 geeignet ist. In den Rahmen ist zusätzlich eine Dichtung 16 eingebracht, welche insbesondere durch den Gießprozess des Rahmens 15 integriert wird. Diese sorgt für eine Abdichtung von Rohseite 18 und Reinseite 19 im Filtergehäuse 11. Dadurch kann der Filterrahmen 15 aus einem langlebigen Gussmaterial gefertigt werden, da dieser keine Dichteigenschaften übernehmen muss.

## Beschreibung

### Stand der Technik

Die Erfindung betrifft ein flaches Filterelement, insbesondere ein Luftfilterelement für die Ansaugluft einer Brennkraftmaschine, welches eine gefaltete Filterbahn mit einem angegossenen oder angespritzten Rahmen aufweist, nach der Gattung des Patentanspruches 1.

Filterelemente der eingangs beschriebenen Art sind z. B. aus der DE 43 40 097 C2 bekannt. Dabei handelt es sich um Filtereinsätze, die in einem zerlegbaren Gehäuse eingebaut und ausgewechselt werden können. Um diese möglichst kostengünstig fertigen zu können, ist die gefaltete Filterbahn aus Filterpapier randseitig mit einer umlaufenden Dichtung versehen, welche gleichzeitig einen flexiblen Filterrahmen bildet. Diese Dichtung ist bevorzugt aus einem PUR-Schaum hergestellt, der eine genügende Elastizität aufweist, um nach Einbau in das Gehäuse eine Abdichtung zwischen Roh- und Reinseite des Filters zu erzeugen.

Diese Dichtungen sind jedoch einer Alterung unterworfen, welche bei längerem Einsatz des Filterelementes zu Undichtheiten im Gehäuse führen kann. Andererseits werden von den Herstellern von Kraftfahrzeugen immer längere Filterstandzeiten gefordert. Außerdem werden durch die Kunden die empfohlenen Wechselintervalle für Luftfilter nicht immer eingehalten. In solchen Fällen kann es zu Undichtheiten kommen, welche die Zuführung nicht vollständig gefilterter Ansaugluft zur Brennkraftmaschine zur Folge haben.

Aufgabe der Erfindung ist es daher, ein flaches Filterelement zu schaffen, welches eine kostengünstig herstellbare und alterungsbeständige Dichtung für den Einbau in das Gehäuse aufweist. Diese Aufgabe wird durch die Merkmale des Patentanspruches 1 gelöst.

### Vorteile der Erfindung

Das erfindungsgemäße Filterelement weist in bekannter Weise einen angegossenen Rahmen auf, wobei hiermit gemeint ist, dass der Rahmen urformtechnisch direkt am Filterkörper, der aus der gefalteten Filterbahn besteht, hergestellt ist. Dies kann durch Gieβen in einer Form oder durch Spritzen an den Rand des Filterkörpers erfolgen. Weiterhin weist der Rahmen Dichtflächen auf, die mit entsprechenden Einbauflächen im Gehäuse des Filters kommunizieren, so dass eine Abdichtung zwischen Roh- und Reinseite gewährleistet ist.

Die Erfindung ist dadurch gekennzeichnet, dass die Dichtflächen des Rahmens durch eine Dichtung gebildet werden, welche an dem Rahmen befestigt ist. Diese Befestigung kann durch den Herstellungsvorgang des Rahmens selbst erfolgen. Da der Rahmen urformtechnisch hergestellt ist, kann während des Herstellungsprozesses eine dichtende Verbindung zwischen Rahmen und Filterkörper bzw. zwischen Dichtung und Filterkörper erfolgen. Die Dichtung wiederum stützt sich im Gehäuse an den Einbauflächen ab, wodurch die Funktion des Filters gewährleistet ist.

Varianten zur Befestigung der Dichtung im Rahmen sind das Eingießen, wobei die Dichtung vor dem Gussvorgang in der Form fixiert werden kann, und das Spritzen der Dichtung im Zwei-Komponentenverfahren. Wichtig ist, dass die Dichtung nicht Teil des Rahmens ist, sondern an diesem befestigt ist, also ein gesondertes Bauteil bzw. einen gesonderten Bereich des Rahmens bildet. Damit kann die Werkstoffwahl für den Rahmen unabhängig von Forderungen an die Leistung dieses Materials als Dichtung getroffen werden. Diese Forderungen können durch die Dichtung selbst erfüllt werden. Eine Werkstoffauswahl für Dichtung und Rahmen kann hinsichtlich der geforderten Standzeiten und Alterungsbeständigkeit optimal ausgeführt werden. Auf diese Weise lassen sich kostengünstig Filterelemente erzeugen, die gleichzeitig einen erhöhten Standard an die Dichtungsanforderungen erfüllen können.

Für die Dichtung kommen alle gebräuchlichen Dichtungswerkstoffe in Betracht. Besonders hochwertige Dichtungen lassen sich beispielsweise aus Silikongummi fertigen. Auch andere Gummimischungen oder auch Moosgummi können für die Dichtung verwendet werden. Der Rahmenwerkstoff muss die Anforderung erfüllen, dass er sich urformtechnisch herstellen lässt, ohne den Werkstoff des Filterkörpers und eventuell auch den Dichtungswerkstoff zu beschädigen. Dies ist durch hinreichend geringe Schmelztemperaturen erfüllt. Neben dem Aufschmelzen des Werkstoffes kann auch eine chemische Verfestigung des Rahmenwerkstoffes z. B. durch Aushärten gewählt werden. Mögliche Werkstoffe für den Rahmen sind z. B. der im Vergleich zu normalen PUR-Schäumen sehr viel alterungsbeständigere Hart-PUR-Schaum mit Shore-Härten von 9 bis 17 oder gebräuchliche Kunststoffe.

Gemäß einer besonderen Ausgestaltung der Erfindung kann der Rahmen die Stirnseiten der gefalteten Filterbahn vollständig umschließen. Mit den Stirnseiten der Filterbahn sind die Seiten gemeint, welche in der Aufsicht die Zick-Zack-Faltung erkennen lassen. An dieser Seite besteht die Notwendigkeit, die Zwischenräume jeweils benachbarter Falten, zumindest der Rohseite oder der Reinseite, dichtend miteinander zu verbinden, um einen Nebenluftstrom zu verhindern. Da die Falten in den Rahmen eingebracht sind, kann durch diesen die Dichtfunktion vollständig übernommen werden, wenn eine vollständige Umschließung der Stirnseiten gewährleistet ist. Alternativ kann der Rahmen aber auch nur an einem Teilbereich der Stirnseiten angreifen, wodurch Material gespart wird. In diesem Fall muss der Verschluss der benachbarten Falten jedoch auf andere Weise gewährleistet werden. Dies kann z. B. durch eine Leimraupe erfolgen, die einseitig auf die Filterbahn aufgebracht wird, und durch Aufstellen der Falten zu einer Verbindung der jeweils benachbarten Falten führt.

Die Herstellung von Filterelementen mit einem Rahmen aus PUR-Schaum gemäß dem Stand der Technik ist besonders einfach, da sich dieses Material während der Herstellung des Rahmens ausdehnt und so in die Filterfalten eindringt, um sich mit diesen zu verbinden. Bei der Wahl anderer Werkstoffe für den Rahmen kann dieser Effekt nicht genutzt werden. Dies gilt auch für den bereits erwähnten Hart-PUR-Schaum. Daher müssen für das Fertigungsverfahren abhängig vom Werkstoff verschiedene Maßnahmen getroffen werden, die im folgenden näher erläutert werden.

Die Grundlagen der beschriebenen Verfahren sind an sich bekannt. Der Filterkörper wird durch Falten der Filterbahn und Aufstellen der Filterfalten erzeugt, so dass sich ein meistens quaderförmiges Gebilde ergibt, welches rohluftseitig bzw. reinluftseitig von den Filterfalten begrenzt wird. Allerdings kann dieser Filterkörper auch trapezförmig geschnitten sein oder auch nur eine abgeschnittene Ecke aufweisen. Außerdem ist es denkbar, diese Filterelemente an gekrümmte Flächen anzupassen. Bei Wahl eines sehr steifen Werkstoffes für den Rahmen muss diese Anpassung an die gekrümmte Fläche vor der Herstellung des Filterrahmens erzeugt werden. Bei elastischeren Materialien kann die Elastizität des Rahmens genutzt werden, um eine Krümmung des Filterelementes erst am Einbauort im Gehäuse zu erzwingen.

An den beschriebenen Filterkörper wird die Dichtung durch den urformtechnischen Prozess angebracht. Z. B. kann der Filterkörper in eine Form eingelegt werden, die bei der Herstellung des Rahmens eine Überschneidung mit dem Filterkörper bewirkt und so zu einer dichtenden Verbindung führt. Eine andere Möglichkeit ist durch die spritzgusstechnische Herstellung des Rahmens direkt an das Filterelement gegeben, wobei das Material des Rahmens durch den Spritzdruck in die Filterfalten eindringt.

Wird der Rahmenwerkstoff in eine nach oben offene Form eingegossen, um dort zu verfestigen, kann eine Überschneidung mit dem Filterkörper dadurch erfolgen, dass an den Faltkanten eine Prägung vorgenommen wird, die parallel zu den Stirnseiten des Filterelementes läuft. Diese Prägung muss im Abstand zu den Stirnseiten so dimensioniert sein, dass sie auf einem Rand der Gussform zu liegen kommt. Dadurch dringt der Bereich zwischen Prägung und stirnseitigem Rand des Filterkörpers in das Volumen ein, welches zur Aufnahme des Rahmenwerkstoffes gedacht ist. Wird die Form bis zum Rand mit dem Rahmenwerkstoff gefüllt, ergibt sich dadurch eine Überschneidung mit dem Filterkörper und somit eine Verbindung zwischen den beiden Bauteilen.

Eine andere Ausgestaltung des Verfahrens sieht vor, dass neben dem Filterkörper auch die Dichtung zur Bildung der besagten Dichtflächen im Gehäuse eingelegt wird. Filterkörper und Dichtung sind derart in der Form fixiert, dass während der urformtechnischen Herstellung des Rahmens eine Verbindung zu beiden Bauteilen geschaffen wird. Damit ergibt sich nach Herstellung des Rahmens eine Baueinheit, die das Filterelement bildet.

Eine andere Ausgestaltung des Verfahrens sieht vor, dass die Form zur Herstellung des Rahmens eine Herstellung des selben im Zwei-Komponentenverfahren zulässt. In diesem Fall müssen Zuführungen für beide Komponenten in der Form vorgesehen werden. Dabei wird eine Komponente eingesetzt, die optimale Eigenschaften für den Rahmen verspricht und eine Komponente, welche die Dichtung für das Gehäuse bildet.

Die beschriebenen Verfahrensmerkmale können untereinander kombiniert werden. Maßgeblich für die Wahl der passenden Verfahrensschritte ist der Werkstoff, der zum Einsatz kommen soll. Ist für den Rahmen ein Werkstoff vorgesehen, welcher sich nicht ausdehnt, kann auf eine Prägung der Faltkanten nicht verzichtet werden. Weiter ist zu beachten, ob eine zusätzliche Dichtung in die Form eingelegt werden soll, oder diese im Zwei-Komponentenverfahren hergestellt werden soll.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: einen Luftfilter mit einem öffenbaren Gehäuse und dem erfindungsgemäßen Filterelement im Schnitt,
- Figur 2: das Detail X gemäß Figur 1 des Filtereinsatzes mit einer eingegossenen, V-förmigen Profildichtung im nicht eingebauten Zustand,
- Figur 3: den Einsatz eines Hohlkammerprofils als Dichtung in einer Darstellung entsprechend Figur 2,
- Figur 4: den Einsatz eines Z-Profils in einer Darstellung gemäß Figur 2,
- Figur 5: den Einsatz eines Y-Profils mit einem die Stirnseiten des Filterelementes umschließenden Rahmen in einer Darstellung gemäß Figur 2,
- Figur 6: eine Gussform mit eingelegtem Filterelement und eingelegter Dichtung im Teilschnitt,
- Figur 7: einen Ausschnitt des gemäß Figur 6 verwendeten Filterkörpers mit Prägungen an den Faltenenden in perspektivischer Ansicht und
- Figur 8: eine Gussform für die Herstellung des Rahmens im Zwei-Komponentenverfahren im Schnitt.

### Beschreibung der Ausführungsbeispiele

Ein Luftfilter 10 für den Ansaugtrakt einer Brennkraftmaschine besteht aus einem Gehäuse, welches aus zwei Gehäuseschalen 11 zusammengesetzt ist. In einer Trennebene 12 ist ein Filterelement 13 eingebaut, welches aus einem Filterkörper 14 mit einem Rahmen 15 und einer Dichtung 16 besteht. Mit der Dichtung, die mit Einbauflächen 17 des Gehäuses kommuniziert, wird eine Rohseite 18 des Filterelementes von einer Reinseite 19 dichtend getrennt. Die Luft strömt entsprechend der angedeuteten Pfeile von einem Einlass 20 des Gehäuses durch das Filterelement 13 zu einem Auslass 21, und wird dadurch gereinigt. Verbrauchte Filterelemente können durch Öffnen des Gehäuses ausgewechselt werden. Hierzu sind lösbare Klammern 22 an der Trennebene 12 des Gehäuses angebracht.

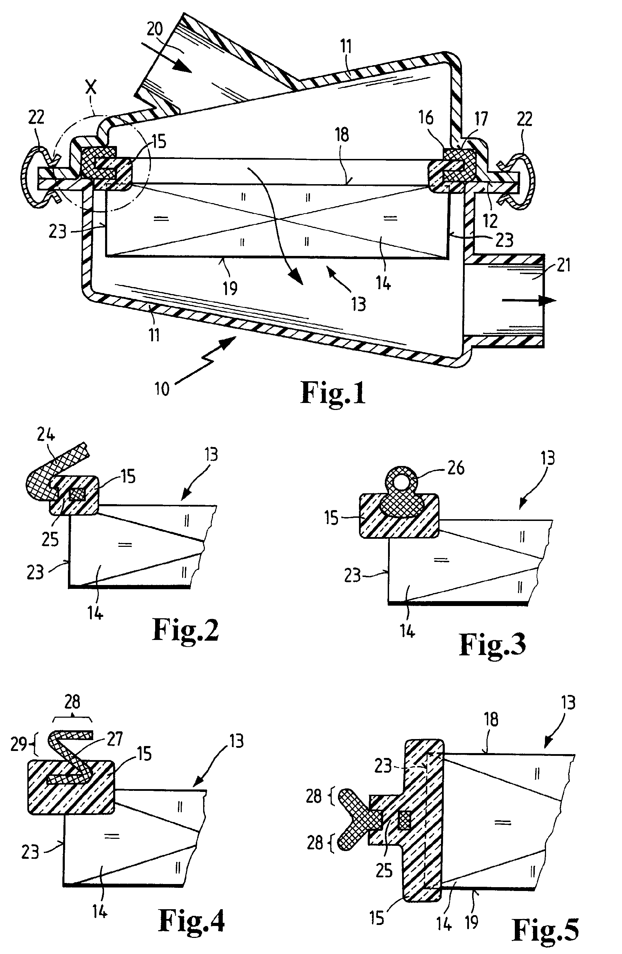

Die Figuren 2 - 5 stellen verschiedene Ausführungsformen des Rahmens 15 und dessen Anbindung an eine Stirnseite 23 des Filterkörpers 14 dar. In Figur 2 besteht die Dichtung aus einem V-Profil 24. Dieses ist in den Rahmen 15 eingegossen, wobei Löcher 25 im V-Profil für eine zuverlässige Halterung im Rahmen dienen, da sie durch das Material des Rahmens ausgefüllt werden.

Gemäß Figur 3 besteht die Dichtung aus einem Hohlkammerprofil 26. Dieses kann sich bei Toleranzen besonders gut an die nicht dargestellten Einbauflächen des Gehäuses anpassen. Das Hohlkammerprofil 26 ist formschlüssig in den Rahmen 15 eingegossen.

Gemäß Figur 4 kommt ein Z-Profil 27 als Dichtung zum Einsatz. Auch dieses ist aufgrund seines Profils formschlüssig in den Rahmen 15 eingegossen. Es ergibt sich eine große Anlagefläche 28 zur Dichtung gegenüber der nicht dargestellten Einbaufläche. Gleichzeitig ist ein großer Toleranzbereich 29 verwirklicht.

Der Rahmen 15 gemäß Figur 5 umschließt die Stirnseite 23 des Filterkörpers 14 vollständig. Eine zusätzliche Abdichtung zwischen Rohseite 18 und Reinseite 19 des Filters ist daher nicht notwendig. Als Dichtung kommt ein Y-Profil zum Einsatz, wobei sich Dichtflächen 28 nach außen vom Rahmen weg erstrecken. Das Y-Profil weist weiterhin die bereits im Zusammenhang mit Figur 2 beschriebenen Löcher 25 auf.

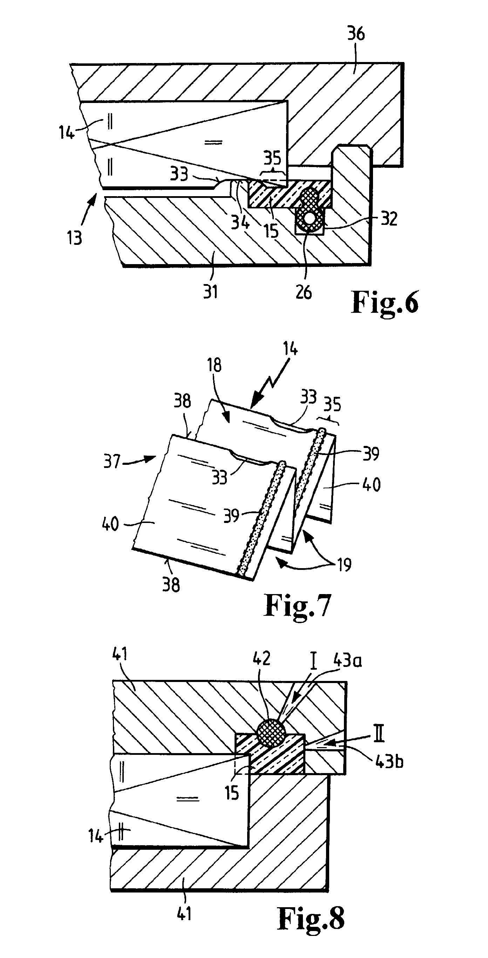

In Figur 6 ist schematisch ein Herstellungsaufbau für das erfindungsgemäße Filterelement 13 dargestellt. Dieser Aufbau besteht aus einer Gießform 31, in der das Hohlkammerprofil 26 in einer hierfür vorgesehenen Aufnahme 32 fixiert wird. Der Filterkörper 14 wird in die Form eingelegt, derart, dass eine Prägung 33 auf einem Rand 34 der Gießform zu liegen kommt. Dadurch taucht ein Randbereich 35 des Filterköpers 14 in die Form ein und wird dadurch in den zu gießenden Rahmen 15 eingeschlossen. Der Rahmen umschließt gleichzeitig das Hohlkammerprofil 26. Damit der Filterkörper während des Gießvorgangs fixiert ist, wird dieser durch ein Gewicht 36 beschwert.

Ein Ausschnitt aus dem Filterkörper 14 gemäß Figur 6 ist in Figur 7 perspektivisch dargestellt. Der Filterkörper wird gebildet aus einer Filterbahn 37, die zick-zack-förmig gefaltet ist. Dadurch ergeben sich Faltkanten 38, wobei diese einseitig mit der Prägung 33 versehen sind. Im Randbereich 35 ist eine Leimraupe 39 angebracht, welche durch Aufstellen o der Filterfalten 40 zu einer Verbindung zwischen jeweils benachbarten Filterfalten führt und so Filtertaschen bildet, die eine zuverlässige Abdichtung zwischen Rohseite 18 und Reinseite 19 bewirken.

In Figur 8 ist eine Form 41 dargestellt, die zum Anspritzen des Rahmens 15 und einer Dichtung 42 in 2-Komponenten-Technik geeignet ist. Die Form bildet einen Hohlraum, der mit dem Filterkörper 14 im Eingriff steht. Weiterhin sind Zuführungskanäle 43a, b für die beiden Komponenten gebildet. Eine Komponente I, die z. B. ein Silikongummi sein kann, wird durch den einen Zuführungskanal 43a zugeführt und eine Komponente II, z. B. ein Hart-PUR-Schaum wird durch den anderen Kanal 43b zugeführt. Dadurch entsteht der Filterrahmen 15 einteilig mit der Dichtung 42, wobei der Rahmen 15 in den Filterkörper 14 eingreift.

## Patentansprüche

1. Flaches Filterelement, insbesondere ein Luftfilterelement für die Ansaugluft einer Brennkraftmaschine, aufweisend eine gefaltete Filterbahn (37), die einen flach ausgebildeten Filterkörper (14) bildet, wobei an dem Filterkörper ein Rahmen (15) dichtend angegossen ist, und der Rahmen (15) Dichtflächen zur Anlage an korrespondierende Einbauflächen (17) einer den Filter bildenden Gehäusestruktur (11) aufweist, damit am Filterkörper (14) eine Rohseite (18) und eine Reinseite (19) voneinander getrennt ist, **dadurch gekennzeichnet, dass** die Dichtflächen des Rahmens durch eine Dichtung (16, 24, 26, 27, 30, 42) gebildet sind, welche an dem Rahmen befestigt ist.

2. Filterelement nach Anspruch 1, **dadurch gekennzeichnet, dass** die Dichtung in den Rahmen eingegossen ist.

3. Filterelement nach Anspruch 1, **dadurch gekennzeichnet, dass** die Dichtung im Zwei-Komponentenverfahren an den Rahmen angespritzt ist.

4. Filterelement nach einem der vorherigen Ansprüche, **dadurch gekennzeichnet, dass** der Rahmen den Stirnseiten (23) der gefalteten Filterbahn enthaltenden Rand des Filterkörpers (14) vollständig umschließt.

5. Verfahren zur Herstellung eines flachen Filterelementes, insbesondere eines Luftfilterelementes für die Ansaugluft einer Brennkraftmaschine, aufweisend eine gefaltete Filterbahn (37), die einen flach ausgebildeten Filterkörper (14) bildet, wobei an dem Filterkörper ein Rahmen (15) dichtend angegossen ist, und der Rahmen (15) Dichtflächen zur Anlage an korrespondierende Einbauflächen (17) einer den Filter bildenden Gehäusestruktur (11) aufweist, damit am Filterkörper (14) eine Rohseite (18) von einer Reinseite (19) voneinander getrennt sind, **gekennzeichnet durch** den Verfahrensschritt, dass die Faltkanten (38) der gefalteten Filterbahn, die zusammen eine der in der Fluidströmung liegenden Seiten des Filterkörpers bilden, parallel zu den die Stirnseite der gefalteten Filterbahn aufweisenden Rändern des Filterkörpers mit einer Prägung (42) versehen werden, die beim Gießen des Rahmens (15) auf einem Rand (34) einer Gießform (31) derart zu liegen kommt, dass ein zwischen Prägung (42) an dem besagten Rand des Filterkörpers befindlicher, ungeprägter Bereich der besagten Faltkanten in die Gießform hineinragt und **durch** Ausfüllen der Gießform mit dem Rahmenmaterial in diesen eingegossen wird.

6. Verfahren zur Herstellung eines flachen Filterelementes, insbesondere eines Luftfilterelementes für die Ansaugluft einer Brennkraftmaschine, aufweisend eine gefaltete Filterbahn (37), die einen flach ausgebildeten Filterkörper (14) bildet, wobei an dem Filterkörper ein Rahmen (15) dichtend angegossen ist, und der Rahmen (15) Dichtflächen zur Anlage an korrespondierende Einbauflächen (17) einer den Filter bildenden Gehäusestruktur (11) aufweist, damit am Filterkörper (14) eine Rohseite (18) von einer Reinseite (19) voneinander getrennt sind, **gekennzeichnet durch** die Verfahrensschritte, dass in eine Form (41) zur Herstellung des Rahmens (15) der Filterkörper (14) und eine Dichtung (16, 24, 26, 27, 30) zur Bildung der besagten Dichtflächen eingelegt und die Form mit dem Rahmenwerkstoff ausgefüllt wird.

7. Verfahren zur Herstellung eines flachen Filterelementes, insbesondere eines Luftfilterelementes für die Ansaugluft einer Brennkraftmaschine, aufweisend eine gefaltete Filterbahn (37), die einen flach ausgebildeten Filterkörper (14) bildet, wobei an dem Filterkörper ein Rahmen (15) dichtend angegossen ist, und der Rahmen (15) Dichtflächen zur Anlage an korrespondierende Einbauflächen (17) einer den Filter bildenden Gehäusestruktur (11) aufweist, damit am Filterkörper (14) eine Rohseite (18) von einer Reinseite (19) voneinander getrennt sind, **gekennzeichnet durch** den Verfahrensschritt, dass der Rahmen (15) und eine mit diesem verbundene Dichtung (42) zur Bildung besagter Dichtflächen im Zwei-Komponentenverfahren an den Filterkörper angespritzt werden.
